# EUROPEAN PATENT SPECIFICATION

(11) **EP 0 688 593 B1**
(45) Date of publication and mention of the grant of the patent: **28.05.2003**
(21) Application number: 94304558.3
(22) Date of filing: 23.06.1994
(51) Int. Cl.: B01D 35/12, B01D 29/15, B01D 29/60, B01D 29/66, B01D 29/90

(54) **Filter system for a liquid stream with automatic rapid back flush capability**
Filtrierungssystem für einen Flüssigkeitsstrom mit automatischer schnellen Rückströmung
Système de filtration d'écoulement liquide à contre-courant automatique rapide

(43) Date of publication of application: 27.12.1995
(73) Proprietor: Sionix Corporation, Irvine, CA 92618 (US)
(72) Inventor: Moorehead, Jack, San Diego, CA 92121 (US)
(74) Representative: Crawford, Andrew Birkby

(56) References cited:
- DE-C- 2 660 239
- US-A- 3 485 369
- US-A- 3 675 775
- US-A- 3 679 060
- US-A- 4 113 618

## Description

### BACKGROUND OF THE INVENTION

This invention relates in general to liquid filter systems and, more specifically to a system for filtering particulate material from a liquid stream providing improved filter life and automatic high efficiency back flushing without interrupting flow through the system.

A great many small rural communities presently use surface water from streams or rivers for their municipal drinking water supply. Due to perceived increases in water pollution, increasingly stringent limits are being required on chemical contaminates and parasites in drinking water. This is requiring increased water treatment, including greater removal of particulate contaminates from the water. In small water treatment plants used by small communities, low cost and low maintenance are required if new water treatment plants are to be affordable.

Many older water treatment plants use dual-media sand filtration systems that are no longer acceptable under the new water quality standards. In some cases, these systems can meet the standards, but only through the use of properly mixed polymer chemical filter aids. The required expensive and complex polymer chemical mixing equipment requires constant attention, since the amount of the chemicals being added to raw water must be frequently readjusted to match the continually changing chemistry of the water being filtered. Most small rural water districts cannot accord to both purchase these sophisticated dual-media systems and provide the full time engineers required to operate and maintain these systems.

Many small rural water districts are trying to avoid these high costs by merging with other districts or drilling wells. Where the costs of such interconnections or wells is excessive, under present regulations, they may install slow sand filters. Most slow sand filters require minimum maintenance and can operate for weeks without cleaning.

Unfortunately, recent particle count studies show that both dual-media and slow said filters fail to meet water quality standards for hours, several days or even months after each backwash cleaning. Contaminates have been found to pass through a sand filter whenever water flow rates are changed and whenever the pump is stopped and turned on again. In order to meet standards, it may be necessary to pump filtered water to waste after every backwash cycle, disposing of thousands of litres (gallons) of water, until the filter "ripens" or compacts.

US-A-3,675,775 discloses a filtration plant consisting of a series of filter units, each comprising a filter bowl containing a tubular filter element. The filter bowl is connected to a water inlet header while the interior of the filter element is connected to a clean water outlet header by way of valve connections. The filter bowl is also valve connected to drain to permit backwashing. A perforated tube mounted in the center of the filter element which serves to collect clean water during filtering and to provide an even distribution of back wash on the filter element during back washing.

DE-C-2660239 discloses a method of flushing the filter chambers of a filter unit, whereby after disconnection of one of a plurality of filter chambers from the filtering circuit, a sludge outlet is opened and then the filtrate situated in the filter chamber is pressurised in return flow direction by a pressure gas, pressed through the filter element and flushed together with the removed filtration residues out through the sludge outlet. Prior to the start of the flushing process, the filter chamber is partially emptied and depressurized at the dirty and clean side in order to form an acceleration section from the flushing filtrate, subsequently a small body of the filtrate situated at the clean side is accelerated by a sudden admission of pressure gas into the emptied unpressurized space at the clean side of the filter chamber and pressed at high speed in return flow direction through the filter element. The flushing action is produced not only by the gas pressure acting on the flushing filtrate but additionally through the sudden deceleration of the body of filtrate which produces a pressure surge.

There is a continuing need for improved liquid filtering systems, especially for use in small water treatment facilities, that will be highly efficient, require little or no monitoring and will not waste excessive liquid during the back flush cycle.

The present invention provides a high efficiency liquid filter apparatus which comprises at least one filtering set which comprises:
a generally cylindrical filter canister containing a filter media;
a first canister conduit penetrating the canister as generally tangential to the canister at an angle of 60° to 80° to the canister axis for liquid flow into and out of said canister on one side of said filter media and in a direction tangential to said filter media;
a second canister conduit connected to said canister for liquid flow into and out of said canister on the opposite side of said filter media;
a first valve assembly for selectively directing liquid flow from an influent pipe to said first canister conduit during filtering operation and directing liquid from said second canister conduit to a waste pipe during back flush operation;
a source of high pressure gas;
a second valve assembly adapted to selectively direct liquid from said second canister conduit to an affluent pipe during filtering operation and a mixture of gas from said high pressure gas source and liquid in said affluent pipe to said second canister conduit during back flush operation;
sensing means for sensing pressure drop across said filter media during filtering operation;
means for selecting the operational mode of said first and second valves in accordance with the sense pressure drop across said filter media. The tangential or swirling flow of liquid between the canister inner wall and the core causes a boundary layer effect, resulting from molecules of the liquid dragging across the filter surface, pulling or pushing trapped particles away from the openings or pores in the filter surface, allowing additional liquid to pass through the filter media before it becomes completely blocked by suspended particles in the influent liquid.

The overall system, which may include a plurality of filter systems sets in parallel, is preferably controlled by a conventional microprocessor, although it can be manually controlled if desired. The sensor system which is provided for measuring pressure drop across the filter media senses differential pressure which is directly proportional to the liquid flow rate. The differential pressure can be compared manually or by the microprocessor with known (previously determined by tests) flow rates to determine the flow rate of each filter set in the system. When the pressure drop is excessive, indicating that the filter has reached capacity, the back flush cycle is initiated, either under manual or microprocessor control. Rapid back flushing at the proper point requires a relatively small amount of clean affluent liquid, so little of the clean liquid is lost during each back flush cycle.

While a single filter set could be used, it is preferred that at least two, and often many more, be used in parallel. Continuous affluent liquid flow can be maintained at all times by assuring that all filter sets are not in the back flush mode at the same time. Where at least one filter set is in the operating mode, water hammer problems which might occur upon closing and opening of valves are eliminated because of ability of the flowing stream to absorb sudden pressure changes in individual filter sets. As the needs of a delivery system increase, additional filter sets can be easily installed.

### BRIEF DESCRIPTION OF THE DRAWING

Details of the invention, and of certain preferred embodiments thereof, will be further understood upon reference to the drawing, wherein:
Figure 1 is a schematic diagram of a filtering system with at least two filter sets, one shown in the operating mode and the other in the back flush mode;
Figure 2 is a perspective view of a filter canister according to the present invention; and
Figure 3 is a schematic elevation view, partially cut-away, of the filter canister of Figure 2.

### DETAILED DESCRIPTION OF PREFERRED EMBODIMENTS

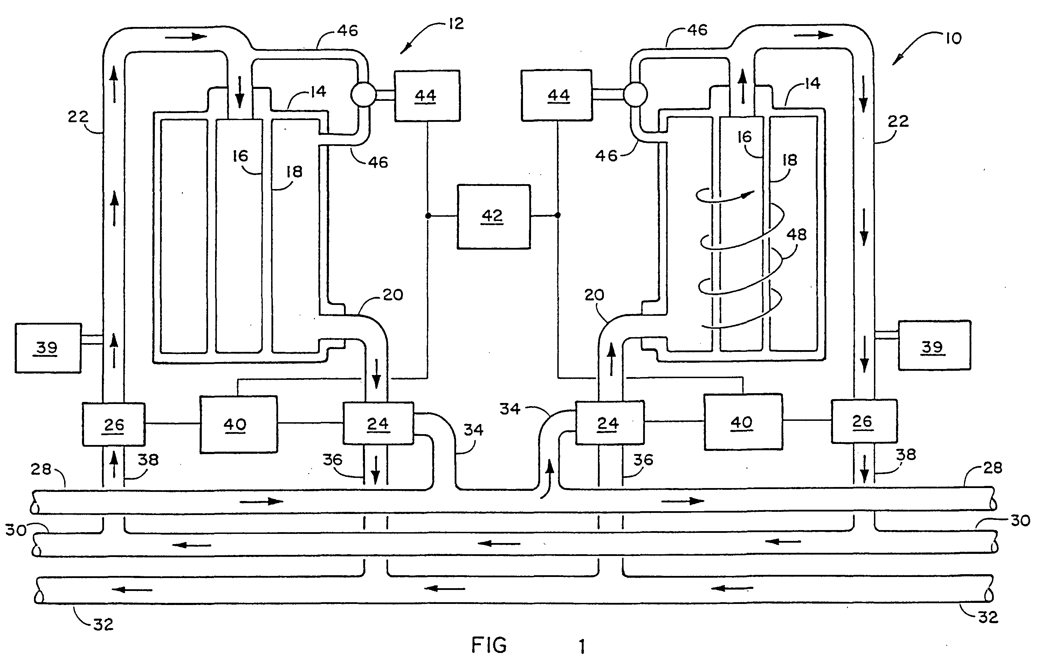

Referring now to Figure 1 there is seen a filtering system including two filter sets 10 and 12 which are structurally substantially identical. As shown in Figure 1, filter set 10 is in the filtering operation mode and set 12 in the back flush mode, as indicated by the fluid flow arrows in the various conduits. Each set 10 and 12 includes a filter canister 14, preferably of cylindrical shape.

Within each canister 14 a porous tube 16 is installed between the top and bottom. Any suitable porous material may be used, such as woven metal cloth, screen or perforated metal or other material that has the desired porosity and strength to resist the flow of liquids therethrough. The outer surface of each tube 16 is covered with a selected filter media. Any suitable filter media may be used, such as sintered stainless steel or the like suitable for the purpose intended.

A first canister conduit 20 is connected to each canister 14 outside tube 16 and a second canister conduit 22 is connected to each canister 14 at the end, in communication with the interior of tube 16. The opposite ends of each first canister conduit 20 and second canister conduit 22 are each connected. to a first valve 24 and second valve 26, respectively.

The filter system cooperates with three pipes in a conventional liquid processing facility, such as a drinking water treatment plant, namely an influent pipe 28 carrying liquid to be filtered, an affluent pipe 30 carrying filtered water from the system and a waste pipe 32 receiving back flush liquid from the system and typically carrying waste to a sewage treatment plant.

Each first valve 24 is connected to influent pipe 28 by an influent conduit 34 and to waste pipe 32 by a waste conduit 36. Each second valve 26 is connected to affluent pipe 30 by an affluent conduit 38. Any suitable valves may be used. Solenoid valves are preferred, especially in a computer-controlled system for ease of automatic operation. A source of high pressure gas 39, such as an air compressor or tank of compressed gas, is connected to each second valve 26 for use in back flushing the filter, as detailed below. While two gas sources 39 may be used as shown, generally a single source can serve all of the valves 26.

A controller 40 is provided to control each of valves 24 and 26 in each set. While the controller 40 could be manual valve operating means, for optimum results automatic control through a conventional microprocessor 42. Typical microprocessors include the IBM compatible 286 or the like commercially available. Each filter set 10 and 12 includes a sensor assembly including tubes 46 connected to second canister conduit 22 and canister 14 so as to measure pressure drop across filter media 18. When pressure drop is excessive, sensor 44 sends a corresponding signal to microprocessor 42 which the initiates the back flush cycle, as described below. In a manual system, sensors 44 could include a simple pressure gauge so that an operator could manually actuate the back flush cycle when excess pressure drop is observed.

Filter set 10 illustrates operation of the system during normal filtering operations. Flow of influent liquid to be filtered enters influent conduit 34 from influent pipe 28, passes through valve 24 and first canister conduit 20 to filter canister 14. The configuration of canister 14 and conduit 20 is such (as described below) to cause a swirling action of the liquid within canister 14, as indicated by arrow 48. The liquid passes through filter media 18 into porous tube 16, then out through second canister conduit 22, through valve 26 and finally through affluent conduit 38 to affluent pipe 30. Valves 24 and 26 may be any suitable valves. For efficiency and quick action, especially when under automatic control, solenoid valves are preferred.

When sensor 44 indicates that the filter is clogged, as indicated by excessive pressure drop across the filter, valves 24 and 26 are moved, either manually or automatically under the control of microprocessor 42, to the position producing the back flush operation illustrated by filter set 12. Valve 26 closes off flow to affluent conduit 38 and opens the connection to high pressure gas source 39, while valve 24 closes off flow of influent liquid through influent conduit 34 and opens the path from first canister conduit 20 to waste conduit 36.

Gas, typically air, under pressure from source 39 forces clean, filtered, liquid within second canister conduit 22 back into porous tube 16, out through filter media 18, through first canister conduit 20, valve 24 and waste conduit 36 to waste pipe 32, as indicated by the arrows in these conduits. The mixture of air and clean liquid forced from conduit 22 through the filter media quickly and thoroughly removes particulate from the filter media. The system is then manually or automatically returned to the configuration shown in filter set 10 and filtering continues.

In many cases, additional filter sets corresponding to sets 10 and 12 will be used in parallel. Generally, most will be in the. operational mode at any given time, with only one or a very few in the back flush mode. Thus, there will always be a continuous flow in the system and water hammer resulting from the use of quick opening and closing valves will be easily absorbed by the system.

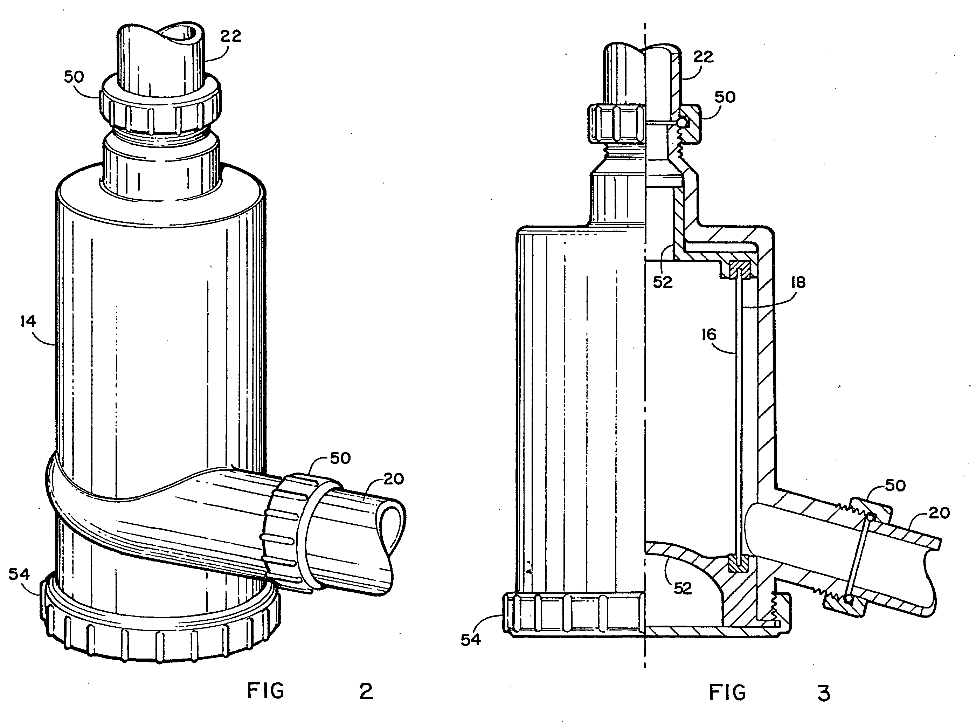

For optimum filter efficiency in this filter system, the filter canister is embodied as shown in Figures 2 and 3. Canister 14 is generally cylindrical in shape, with the connection from first conduit 20 through which influent liquid enters approximately tangential to the canister cylinder, and angled from degrees relative to the cylinder 60 to 80 axis, angled toward the second conduit connection to said canister, as best seen in Figure 3. This causes a swirling action in the incoming liquid around the porous tube 16 and filter media 18 within the canister. This has been found to cause a boundary layer effect, with water molecules dragging across the filter surface, pulling or pushing any trapped particles from the openings or pores in the filter surface, which allows additional liquid to pass through the filter media 18 before it becomes completely blocked by particles and allows uniform use of the entire filter surface.

Conventional threaded compression fittings 50 clamp and seal around conduits 20 and 22. Porous tube 16 and filter media 18 are supported by end support mounts 52 which fit snugly within canister 14. A full diameter threaded cap 54 is provided at the bottom of canister 14 to permit removal and replacement of tube 16, media 18 and supports 52.

Other applications, variations and ramifications of this invention will occur to those skilled in the art upon reading this disclosure. Those are intended to be included within the scope of this invention, as defined in the appended claims.

## Claims

1. A high efficiency liquid filter apparatus which comprises at least one filtering set which comprises:
a generally cylindrical filter canister (14) containing a filter media (16);
a first canister conduit (20) for liquid flow into and out of said canister on one side of said filter media and in a direction tangential to said filter media, and a second canister conduit (22) connected to said canister for liquid flow into and out of said canister on the opposite side of said filter media, the first canister conduit penetrating the canister generally tangential to the canister at an angle of 60° to 80° to the canister axis, angled toward the second conduit connection to said canister;
a first valve assembly (24) for selectively directing liquid flow from an influent pipe (28) to said first canister conduit (20) during filtering operation and directing liquid from said first canister conduit (20) to a waste pipe during back flush operation;
a source of high pressure gas (39);
a second valve assembly (26) adapted to selectively direct liquid from said second canister conduit to an affluent pipe during filtering operation and a mixture of gas from said high pressure gas source and liquid in said affluent pipe to said second canister conduit during back flush operation;
sensing means (44) for sensing pressure drop across said filter media during filtering operation;
means (40) for selecting the operational mode of said first and second valves in accordance with the sensed pressure drop across said filter media.

2. The apparatus according to Claim 1 wherein said system includes at least two of said filter sets, whereby at least one set may be operated in the filtering mode at all times.

3. The apparatus according to claim 1 wherein said means (40) for selecting the operation mode of said first and second valves includes microprocessor means for receiving said sense pressure drop and for operating said valves to back flush said filter media for a selected period at a selected degree of pressure drop.

4. The apparatus according to claim 1 wherein said filter media is formed on a porous tube within said canister and said first canister conduit penetrates the canister adjacent to one end outside said tube and said canister conduit penetrates said canister axially within said tube.

## Patentansprüche

1. Hocheffiziente Flüssigkeitsfiltervorrichtung, die wenigstens einen Filtersatz umfasst, der Folgendes umfasst:
eine allgemein zylindrische Filterbüchse (14), die ein Filtermedium (16) enthält;
eine erste Büchsenleitung (20), die die Büchse allgemein tangential zur Büchse in einem Winkel von 60° bis 80° zur Büchsenachse, in Richtung auf die zweite Leitungsverbindung mit der genannten Büchse abgewinkelt, penetriert, für den Strom von Flüssigkeit in die und aus der genannten Büchse auf einer Seite des genannten Filtermediums und in einer Richtung tangential zu dem genannten Filtermedium;
eine mit der genannten Büchse verbundene zweite Büchsenleitung (22) für den Flüssigkeitsstrom in die und aus der genannten Büchse auf der gegenüberliegenden Seite des genannten Filtermediums;
eine erste Ventilbaugruppe (24) zum selektiven Leiten von Flüssigkeitsstrom von einem Einlaufrohr (28) zu der genannten ersten Büchsenleitung (20) während des Filtervorgangs und zum Leiten von Flüssigkeit von der genannten zweiten Büchsenleitung (22) zu einem Abflussrohr während des Rückspülvorgangs;
eine Hochdruckgasquelle (38);
eine zweite Ventilbaugruppe (26), die so gestaltet ist, dass sie selektiv Flüssigkeit von der genannten zweiten Büchsenleitung zu einem Zuflussrohr während des Filtervorgangs und ein Gemisch aus Gas von der genannten Hochdruckgasquelle und Flüssigkeit in dem genannten Zuflussrohr zu der genannten zweiten Büchsenleitung während des Rückspülvorgangs leitet;
Fühlmittel (44) zum Erfassen eines Druckabfalls über das genannte Filtermedium während des Filtervorgangs;
Mittel (40) zum Wählen des Betriebsmodus des genannten ersten und des genannten zweiten Ventils gemäß dem erfassten Druckabfall über das genannte Filtermedium.

2. Vorrichtung nach Anspruch 1, bei der das genannte System wenigstens zwei der genannten Filtersätze aufweist, so dass jederzeit wenigstens ein Satz im Filtermodus betrieben werden kann.

3. Vorrichtung nach Anspruch 1, bei der das genannte Mittel (40) zum Wählen des Betriebsmodus des genannten ersten und des genannten zweiten Ventils einen Mikroprozessor zum Empfangen des genannten Druckabfalls und zum Betätigen der genannten Ventile zum Rückspülen des genannten Filtermediums für eine gewählte Periode bei einem gewählten Druckabfallgrad beinhaltet.

4. Vorrichtung nach Anspruch 1, bei der das genannte Filtermedium auf einer porösen Röhre in der genannten Büchse ausgebildet ist und die genannte Büchsenleitung die Büchse an einem Ende außerhalb der genannten Röhre penetriert und die genannte Büchsenleitung die genannte Büchse axial innerhalb der genannten Röhre penetriert.

## Revendications

1. Un appareil à rendement élevé pour filtrer des liquides, qui comporte au moins un ensemble filtrant qui comprend :
une boîte métallique à filtre (14) généralement cylindrique, qui contient un milieu filtrant (16) ;
un premier conduit (20) pour boîte métallique qui pénètre dans la boîte métallique généralement tangentiellement à cette boîte métallique, à un angle de 60° à 80° relativement à l'axe de la boîte métallique, incliné vers la connexion du deuxième conduit à ladite boîte métallique, pour permettre à un liquide de s'écouler dans celle-ci et d'en sortir sur un côté dudit milieu filtrant et dans une direction tangentielle audit milieu filtrant ;
un deuxième conduit (22) pour boîte métallique connecté à ladite boîte métallique pour l'écoulement d'un liquide dans, et hors de ladite boîte métallique du côté opposé audit milieu filtrant ;
un premier ensemble formant soupape (24) pour diriger sélectivement le débit de liquide depuis un tuyau d'apport (28) jusqu'audit premier conduit (20) pour boîte métallique pendant l'opération de filtrage, et pour diriger le liquide depuis ledit deuxième conduit (22) pour boîte métallique jusqu'à un tuyau de vidange pendant l'opération de rinçage à contre-courant ;
une source de gaz à haute pression (38) ;
un deuxième ensemble formant soupape (26) adapté pour diriger sélectivement le liquide depuis ledit deuxième conduit pour boîte métallique jusqu'à un tuyau affluent pendant l'opération de filtrage et un mélange de gaz provenant de ladite source de gaz à haute pression, et de liquide dans ledit tuyau affluent, vers ledit deuxième conduit pour boîte métallique pendant l'opération de rinçage à contre-courant ;
des moyens capteurs (44) pour capter les chutes de pression dans ledit milieu filtrant pendant l'opération de filtrage ;
des moyens (40) pour sélectionner le mode de fonctionnement desdites première et deuxième soupapes en fonction de la chute de pression captée dans ledit milieu filtrant.

2. L'appareil selon la revendication 1, dans lequel ledit système comprend au moins deux desdits ensembles filtrants, dont un au moins peut être utilisé continuellement en mode de filtrage.

3. L'appareil selon la revendication 1, dans lequel les moyens (40) de sélection du mode de fonctionnement desdites première et deuxième soupapes comprennent des moyens microprocesseurs pour recevoir ladite chute de pression captée et pour actionner lesdites soupapes pour rincer à contre-courant ledit milieu filtrant pendant une période sélectionnée, à un niveau sélectionné de chute de pression.

4. L'appareil selon la revendication 1, dans lequel ledit milieu filtrant est formé sur un tube poreux à l'intérieur de ladite boîte métallique et ledit premier conduit pour boîte métallique pénètre dans la boîte métallique à proximité d'une extrémité à l'extérieur dudit tube et ledit conduit pour boîte métallique pénètre axialement dans la boîte métallique à l'intérieur dudit tube.
